# EUROPEAN PATENT SPECIFICATION

(11) **EP 2 128 913 B1**
(45) Date of publication and mention of the grant of the patent: **07.09.2022**
(21) Application number: 09156145.6
(22) Date of filing: 25.03.2009
(51) Int. Cl.: H01M 50/152, H01M 50/169, H01M 50/171, H01M 50/578, H01M 50/342, H01M 10/0525

(54) **Cap assembly and secondary battery having the same**
Kappenanordnung und Sekundärbatterie damit
Ensemble de couvercle et batterie secondaire en disposant

(30) Priority: 30.05.2008 KR 20080050899
(43) Date of publication of application: 02.12.2009
(73) Proprietor: Samsung SDI Co., Ltd., Gyeonggi-do (KR)
(72) Inventor: Kim, Dae-Kyu, Suwon-si Gyeonggi-do (KR); Kim, Ik-Kyu, Suwon-si Gyeonggi-do (KR)
(74) Representative: Walaski, Jan Filip

(56) References cited:
- FR-A- 2 579 833
- JP-A- 8 153 536
- JP-A- 57 107 558
- JP-A- H11 273 640
- JP-A- 2004 079 399
- JP-B2- 3 609 600
- KR-A- 20080 043 533
- US-A- 3 617 386
- US-A- 4 943 497
- US-A- 5 418 082
- US-A- 5 738 952
- US-A- 5 766 791
- US-A- 5 879 832
- US-A- 5 925 478
- US-A- 6 165 637
- US-A1- 2004 214 075
- US-B1- 6 207 319
- LI HAO ET AL: "An Intelligent Prediction Strategy of the Maximum Thinning Rate of Cylindrical Part with Flange during Sheet Metal Drawing Process", 2019 CHINESE CONTROL AND DECISION CONFERENCE (CCDC), IEEE, 3 June 2019 (2019-06-03), pages 2876-2881, XP033614991, DOI: 10.1109/CCDC.2019.8832985 [retrieved on 2019-09-10]

## Description

Aspects of the present invention relate to a cap assembly and a secondary battery having the same.

Secondary batteries are rechargeable and are therefore, more economical than disposable batteries. Secondary batteries have a high capacity and a relatively small volume, so they are often used as power sources for handheld electric appliances and high power products, such as hybrid cars and battery-driven tools. Secondary batteries include, for example, nickel-cadmium batteries, nickel-metal hydride batteries, nickel-zinc batteries, lithium ion secondary batteries, and lithium polymer secondary batteries.

Lithium secondary batteries are widely used because they have a high operating voltage and a high energy density per unit weight. Lithium secondary batteries are formed by accommodating an electrode assembly and an electrolyte in a case, and then sealing the case. The lithium secondary batteries may be classified as can-type and pouch-type, depending on the composition of the case. Can-type batteries may be classified as cylindrical or rectangular, according to the shape of the can.

A cylindrical secondary battery is formed by accommodating an electrode assembly and an electrolyte in a cylindrical can, and sealing the cylindrical can with a cap assembly. The electrode assembly is formed by stacking and winding a positive electrode plate, a negative electrode plate, and a separator, into a jellyroll-type shape.

When a secondary battery is overcharged, the electrolyte evaporates, and the internal resistance and the internal temperature of the battery are increased. Moreover, in an overcharged secondary battery the internal pressure is increased, due to gas generated by the electrode assembly, which may result in a fire or an explosion.

To solve these problems, a cylindrical secondary battery generally includes a safety device to block current flow, when the internal pressure of the battery is too high. That is, when the internal pressure of the battery is higher than a specific level, a vent in the cap assembly is broken to block current flow.

However, a conventional vent requires a high breaking pressure, which means the internal pressure of the battery can become high. Thus, it is difficult to ensure the stability of the battery. Moreover, a conventional vent has a wide range of operational dispersion in breaking pressures, depending on the internal pressure of a battery, and thus, cannot operate normally.

Aspects of the present invention provide: a cap assembly having a vent which can operate at a low breaking pressure, to reduce the dispersion in breaking pressures and enhance stability; and a secondary battery including the cap assembly.

FR 2 579 833, JP 08 153536 and JP 57 107558 discloses various types of vents for batteries. US 4943497 discloses an explosion proof enclosed cell provided with explosion proof structure and also relates to an organic electrolytic secondary cell having such structure. US 5418082 A sealed battery including a safety valve made of a metal plate which can be deformed by the increase of the inner pressure of the battery, and current cutting-off means which is actuated by the deformation of the safety valve, wherein the safety valve has a safety valve projection provided at its center to project toward an electric power generating element of the battery, a disk having a central aperture in which the safety valve projection is inserted and gas apertures through which gas is passed is fixed between the safety valve and the electric power generating element, a thin metal plate to which one of the leads of the electric power generating element is connected is attached to the element side of the disk to close the central aperture, and the safety valve projection is welded to the thin metal plate through the central aperture.

According to the present invention, there is provided a cap assembly according to claim 1 that comprises a vent and a secondary battery that includes the claimed cap assembly.

According to an exemplary embodiment of the present invention, a cap assembly having a vent is provided. The vent includes a body, a flange, and a connecting part disposed between the body and the flange. The connecting part is thinner than the body and/or the flange.

According to another exemplary embodiment of the present invention, provided is a secondary battery that includes an electrode assembly, a can accommodating the electrode assembly, and a cap assembly sealing the can. The cap assembly includes a vent having a body, a flange, and a connecting part disposed between the body and the flange. The thickness of the connecting part is less than the thickness of the body and/or the flange.

According to another exemplary embodiment of the present invention, the body may be disposed in the middle of the vent, and the flange may be disposed outside of the body and extend from the connecting part.

According to another exemplary embodiment of the present invention, the connecting part may include a first connecting part connected to the body, a second connecting part connected to the flange, and a bent part disposed between the first connecting part and the second connecting part.

According to another exemplary embodiment of the present invention, the bent part may include a first bent part connected to the first connecting part, a second bent part connected to the second connecting part, and a third connecting part connected to the first bent part and the second bent part.

According to another exemplary embodiment of the present invention, the first bent part may be bent toward the body, and the second bent part may be bent away from the body.

According to another exemplary embodiment of the present invention, the thickness of the third connecting part may be from 53 to 80% of the thicknesses of the body and/or the flange.

According to another exemplary embodiment of the present invention, the third connecting part may be formed to a thickness of from 0.16cm to 0.24cm.

According to another exemplary embodiment of the present invention, the thickness of the first connecting part may be from 53% to less than 100% of the thicknesses of the body and/or the flange.

According to another exemplary embodiment of the present invention, the thickness of the first bent part may be from 73% to less than 100% of the thicknesses of the body and/or the flange.

These and/or other aspects and advantages of the invention will become apparent and more readily appreciated from the following description of the embodiments, taken in conjunction with the accompanying drawings of which:
FIGS. 1A and 1B are an exploded perspective view and an assembled cross-sectional view of a secondary battery, according to an exemplary embodiment of the present invention, respectively;
FIG. 2A is a cross-sectional view of a vent, according to a first exemplary embodiment of the present invention;
FIG. 2B is an enlarged cross-sectional view of a connecting part of the vent of FIG. 2A;
FIG. 3 is a cross-sectional view of a connecting part of a vent, according to a second exemplary embodiment of the present invention;
FIG. 4A is a dispersion graph of operating pressure data listed in Table 1, according to a comparative example;
FIG. 4B is a dispersion graph of operating pressure data listed in Table 1, according to an Example of the present invention;
FIG. 5 is a perspective view of a vent having a crack; and
FIGS. 6A to 6C are plan views of vents having various notches, according to exemplary embodiments of the present invention.

Reference will now be made in detail to the exemplary embodiments of the present invention, examples of which are illustrated in the accompanying drawings, wherein like reference numerals refer to the like elements throughout. The exemplary embodiments are described below, in order to explain the aspects of the present invention, by referring to the figures.

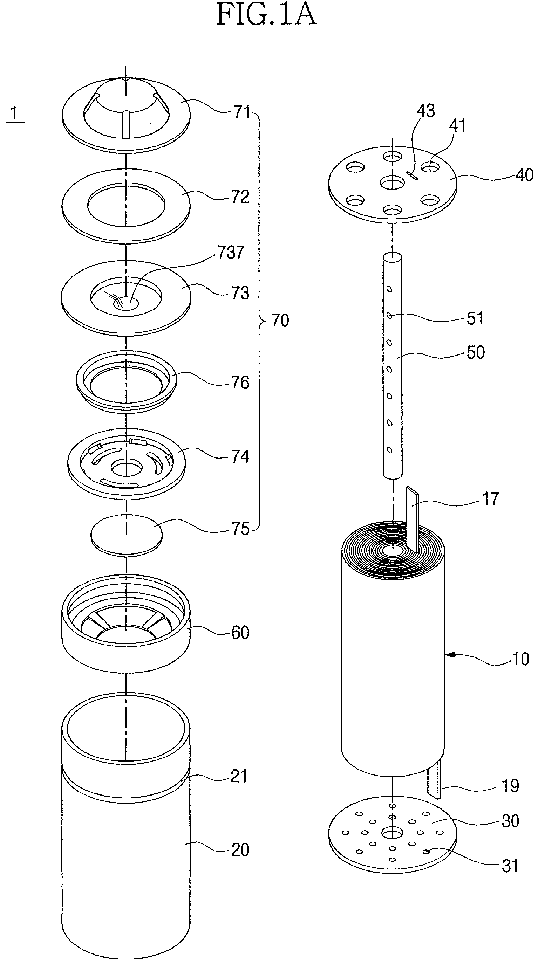

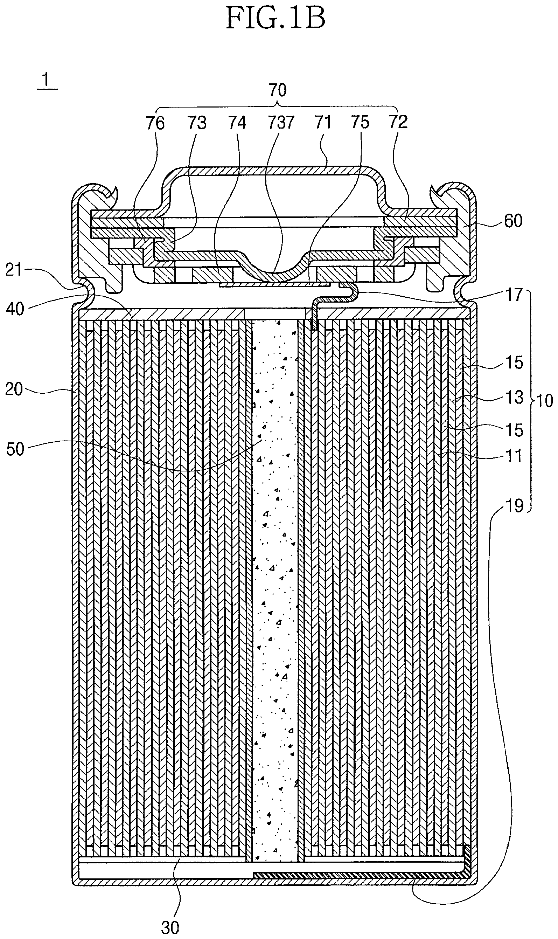

FIG. 1A is an exploded perspective view of a secondary battery 1, according to an exemplary embodiment of the present invention, and FIG. 1B is an assembled cross-sectional view of the secondary battery 1. Referring to FIGS. 1A and 1B, the secondary battery 1 includes an electrode assembly 10, a can 20 to house the electrode assembly, and a cap assembly 70 to seal the can 20. The secondary battery 1 may also include a lower insulating plate 30, an upper insulating plate 40, a center pin 50, and an insulating gasket 60.

The electrode assembly 10 includes first and second electrode plates 11 and 13, and a separator 15 disposed therebetween, which are stacked and wound into a jellyroll-type shape. The electrode assembly 10 is cylindrical and has a hollow center.

The first and second electrode plates 11 and 13 have different polarities, and the separator 15 prevents a short circuit from being formed between the electrode plates 11 and 13. The first and second electrode plates 11 and 13 are formed by applying a positive or negative electrode active material slurry, to a collector plate formed of aluminum or copper.

The first and second electrode plates 11 and 13 include non-coating portions, to which the slurries are not applied. First and second electrode tabs 17 and 19 are attached to the non-coating portions. That is, the first electrode tab 17 is attached to the non-coating portion of the first electrode plate 11, and the second electrode tab 19 is attached to the non-coating portion of the second electrode plate 13. Accordingly, the first and second electrode tabs 17 and 19 have the same polarities as the first and second electrode plates 11 and 13, respectively.

The first electrode tab 17 extends from the top surface of the electrode assembly 10, toward the cap assembly 70. The second electrode tab 19 extends from the bottom surface of the electrode assembly 10, toward the bottom of the can 20. On the other hand, the first electrode tab 17 may optionally extend from the bottom surface of the electrode assembly 10, and the second electrode tab 19 may extend from the top surface of the electrode assembly 10. Alternatively, both the electrode tabs 17 and 19 may extend in the same direction, according to the forming process of the battery.

The can 20 may be formed of a metal, such as aluminum or stainless steel, and may be formed in various shapes, e.g., the can 20 may be cylindrical or rectangular. The can 20 has an opening through which the electrode assembly 10 is inserted. The lower insulating plate 30 may be disposed under the electrode assembly 10, at the bottom of the can 20.

Before inserting the electrode assembly 10 into the can 20, the second electrode tab 19 is bent toward the center of the electrode assembly 10, and extends along the bottom surface of the electrode assembly 10. The second electrode tab 19 extends across the hollow center of the electrode assembly 10.

The lower insulating plate 30 includes a through-hole that faces the hollow center of the electrode assembly 10, through which the second electrode tab 19 can be welded to the can 20. The lower insulating plate 30 may include a plurality of holes 31, to provide additional space for an electrolyte.

A welding rod is inserted through the hollow center of the electrode assembly 10 and through the through-hole of the lower insulating plate 30, to weld the second electrode tab 19 to the bottom the can 20. Thus, the can 20 has the same polarity as the second electrode tab 19, and can serve as an electrode terminal.

The upper insulating plate 40 may be disposed on the electrode assembly 10, and the center pin 50 may be inserted into the hollow center of the electrode assembly 10. The upper insulating plate 40 may include a plurality of first holes 41, to facilitate the permeation of the electrolyte into the electrode assembly 10. The upper insulating plate 40 may also include a second hole 43, through which the first electrode tab 17 can extend.

The center pin 50 prevents the deformation of the electrode assembly 10, due to external impacts, and serves as a path for the release of gas generated by the electrode assembly 10. The center pin 50 may include a plurality of holes 51 formed in its side surface, to facilitate the impregnation of the electrolyte and the exhaustion of the gas.

The can 20 includes a bead 21 formed by inwardly bending a side surface of the can 20, adjacent to the top surface of the upper insulating plate 40. The bead 21 prevents up-and-down movements of the electrode assembly 10, with respect to the can 20.

The insulating gasket 60 is inserted through the opening of the can 20, and the cap assembly 70 is coupled into the insulating gasket 60, to seal the can 20. The insulating gasket 60 is formed of an insulating, elastic material, and surrounds an outer surface of the cap assembly 70. The insulating gasket 60 insulates the can 20 from the cap assembly 70, and seals the can 20.

The cap assembly 70 includes a cap-up 71 that serves as an electrode terminal and lower components disposed under the cap-up 71. The cap assembly 70 includes a positive temperature coefficient (PTC) thermistor 72, a vent 73, a cap-down 74, and a sub-plate 75, which are sequentially disposed under the cap-up 71. To be specific, the vent 73 is disposed under the PTC thermistor 72, and an insulator 76 is interposed between the vent 73 and the cap-down 74 to insulate them from each other. The cap-down 74 further includes a through-hole, through which gas pressure can to be applied to a lower surface of the vent 73. The components of the cap assembly 70 may be preassembled and then equipped in the insulating gasket 60, or may be sequentially stacked on the insulating gasket 60.

The sub-plate 75 is disposed under the cap-down 74, crossing the hollow center formed therein. The sub-plate 75 is coupled to a protrusion 737 of the vent 73, by welding. The protrusion 737 projects toward the electrode assembly 10.

The first electrode tab 17 is coupled to the bottom surface of the cap-down 74, or to the bottom surface of the sub-plate 75, by welding. The cap-down 74 and the sub-plate 75 may be coupled by laser welding, and the protrusion 737 and the sub-plate 75 may be coupled by ultrasonic welding.

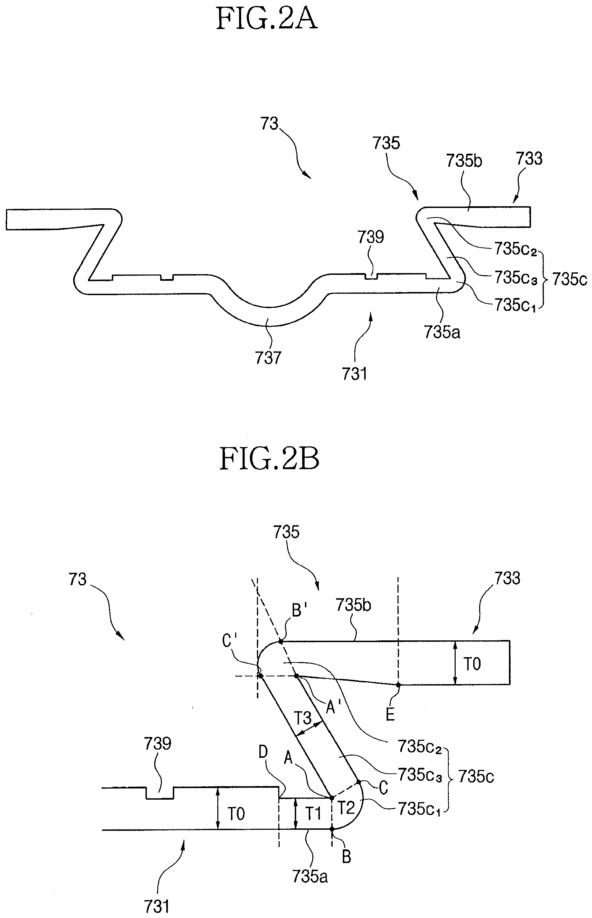

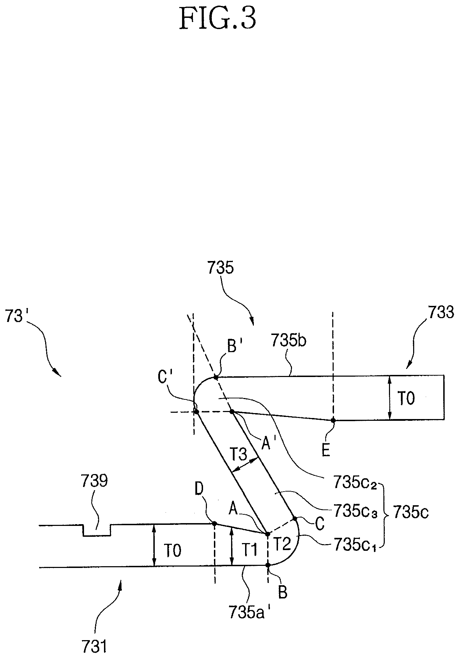

FIG. 2A is a cross-sectional view of the vent 73, and FIG. 2B is an enlarged cross-sectional view of a connecting part of the vent 73. FIG. 3 is a cross-sectional view of a connecting part 735 of the vent 73. Referring to FIGS. 2A and 2B, the vent 73 includes a body 731, a flange 733, and the connecting part 735, which connects the body 731 and the flange 733.

A conventional vent has a uniform thickness, but in the vent 73 the connecting part 735 has a smaller thickness than at the body 731 and/or the flange 733. When the connecting part 735 is thinner than the body 731 and the flange 733, the vent 73 may operate at a lower, more uniform, breaking pressure, thus improving the stability of the secondary battery 1. To be specific, the body 731 is disposed in the middle of the vent 73, and the flange 733 extends away from the body 731, from the connecting part 735.

The connecting part 735 includes a first connecting part 735a that extends from the body 731, a second connecting part 735b that extends from the flange 733, and a bent part 735c that extends between the first connecting part 735a and the second connecting part 735b. Thickness T1 of the first connecting part 735a may be from 53% to less than 100% of thickness T0 of the body 731 and the flange 733.

The bent part 735c includes a first bent part 735c1 that extends from the first connecting part 735a, a second bent part 735c2 that extends from the second connecting part 735b, and a third connecting part 735c3 that extends between the first bent part 735c1 and the second bent part 735c2. The first bent part 735c1 is bent toward the body 731, and the second bent part 735c2 is bent away from the body 731.

Thickness T2 of the first bent part 731c1 may be from 73% to less than 100% of thickness T0 of the body 731 and the flange 733. Thickness T3 of the third connecting part 735c3 may be from 53 to 80% of thickness T0 of the body 731 and the flange 733.

An inner surface of the vent 73 faces the cap-up 71, and an outer surface of the vent 72 faces away from the cap-up 71. The first connecting part 735a includes a first end connected to the first bent part 735c1 and a second end connected to the body 731. The first bent part 735c1 includes a first end connected to the first connecting part 735a, and a second end connected to the third connecting part 735c3. The third connecting part 735c3 includes a first end connected to the first bent part 735c1, and a second end connected to the second bent part 735c2.

The second bent part 735c2 includes a first end connected to the third connecting part 735c3, and a second end connected to the second connecting part 735b. The second connecting part 735b includes a first end connected to the second bent part 735c2, and a second end connected to the flange 733.

The first bent part 735c1 may be formed in a sector shape having vertex A, at which the first end of the inner surface of the first connecting part 735a meets the first end of the inner surface of the third connecting part 735c3. Points B and C are disposed at ends of a first arc between the first end of the outer surface of the first connecting part 735a and the first end of the outer surface of the third connecting part 735c3, respectively. The first arc is bound by first and second radii that meet at vertex A.

The second bent part 735c2 may be formed in a sector shape having vertex A', at which the first end of the outer surface of the second connecting part 735b meets the second end of the outer surface of the third connecting part 735c3. Points B' and C' are disposed at ends of a second arc between the first end of the inner surface of the second connecting part 735b and the inner surface of the third connecting part 735c3. Point D, of the inner surface of the first connecting part 735a, and point C may be disposed between point C' and point E of the outer surface of the second connecting part 735b. The second arc is bound by third and fourth radii that meet at vertex A'.

The first connecting part 735a may have a flat cross-section, between point A and point D. Thereby the first connection part has a rectangular-shaped cross-section. Alternatively, a first connecting part 735a' may have an inclined cross-section, between point A and point D, as shown in FIG. 3. Thereby the first connection part has a trapezoid-shaped cross-section.

Table 1 shows operating pressures and breaking pressures of a conventional vent and a vent according to an exemplary embodiment of the present invention, are used.

**[Table 1]**

| | Comparative Example | | Example | |
|---|---|---|---|---|
| | Operating Pressure (kgf/cm²) | Breaking Pressure (kgf/cm²) | Operating Pressure (kgf/cm²) | Breaking Pressure (kgf/cm²) |
| 1 | 9.08 | 20.39 | 9.48 | 18.66 |
| 2 | 9.59 | 20.09 | 9.59 | 18.86 |
| 3 | 9.59 | 20.19 | 9.48 | 18.66 |
| 4 | 9.18 | 20.09 | 9.59 | 18.86 |
| 5 | 9.59 | 20.50 | 9.48 | 18.86 |
| 6 | 9.48 | 20.39 | 9.69 | 18.97 |
| 7 | 8.97 | 19.99 | 9.59 | 18.76 |
| 8 | 9.08 | 20.19 | 9.38 | 19.07 |
| 9 | 9.59 | 20.09 | 9.48 | 18.76 |
| 10 | 9.18 | 20.19 | 9.48 | 18.76 |
| 11 | 9.69 | 20.39 | 9.48 | 18.66 |
| 12 | 9.69 | 19.99 | 9.48 | 18.76 |
| 13 | 9.69 | 20.09 | 9.48 | 18.97 |
| 14 | 9.89 | 19.88 | 9.48 | 18.66 |
| 15 | 9.18 | 19.88 | 9.59 | 18.66 |
| 16 | 9.48 | 19.99 | 9.69 | 18.66 |
| 17 | 9.89 | 20.29 | 9.48 | 18.76 |
| 18 | 9.18 | 20.09 | 9.59 | 18.97 |
| 19 | 9.48 | 20.09 | 9.48 | 18.86 |
| 20 | 8.97 | 19.99 | 9.59 | 18.76 |
| 21 | 9.38 | 19.99 | 9.69 | 18.97 |
| 22 | 9.38 | 19.78 | 9.59 | 18.86 |
| 23 | 9.48 | 20.39 | 9.48 | 18.86 |
| 24 | 9.38 | 20.09 | 9.59 | 18.97 |
| 25 | 9.69 | 20.29 | 9.48 | 18.66 |
| 26 | 9.48 | 20.39 | 9.48 | 18.86 |
| 27 | 9.18 | 20.09 | 9.59 | 19.07 |
| 28 | 9.28 | 20.39 | 9.59 | 18.56 |
| 29 | 9.59 | 20.19 | 9.48 | 18.86 |
| 30 | 9.08 | 20.19 | 9.48 | 18.76 |
| s | 0.260 | 0.183 | 0.075 | 0.133 |
| Max | 9.89 | 20.50 | 9.69 | 19.07 |
| Min | 8.97 | 19.78 | 9.38 | 18.56 |

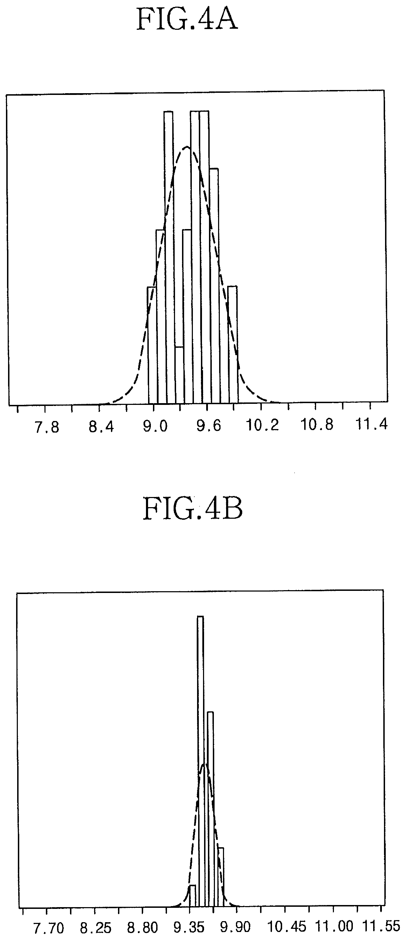

Table 1 shows the operating pressures at which breaking occurs in vents preset to be deformed at an operating pressure of 9.5 kgf/cm² and broken at a pressure of 20 kgf/cm². The vent used as the comparative example has a uniform thickness of 0.3cm, whereas the vent used as the Example has a thickness of 0.24cm at the third connecting part (80% of 0.3cm) and a thickness of 0.3cm at the other parts thereof. As shown in Table 1, the operating pressure dispersion was decreased from 0.260 to 0.075, and the in breaking pressure dispersion was decreased from 0.183 to 0.133. FIG. 4A is a graph of the operating pressure data listed in Table 1, of the Comparative Example, and FIG. 4B is a graph of the operating pressure data listed in Table 1, of the Example. As shown in FIGS. 4A and 4B, the dispersion was significantly decreased in the Example, as compared to that in the Comparative Example.

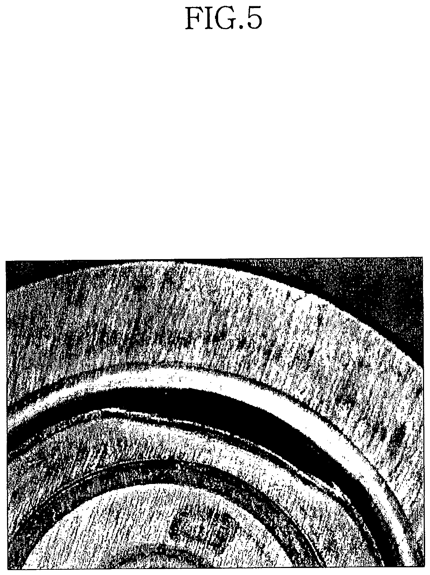

FIG. 5 is a perspective view of the vent having a crack, which is generated when the third connecting part has a thickness of about 0.156 cm, i.e., 52% of the thickness of the other parts. When the crack is generated as shown in FIG. 5, the electrolyte can leak. Thus, the thickness of the third connecting part may be from 53 to 80% of the thicknesses of the body and flange.

Referring again to FIGS. 2A and 2B, the vent 73 includes a notch 739 formed between the protrusion 737 and the connecting part 735. The notch 739 is formed to easily break, so as to block current flow when the internal pressure of the secondary battery 1 is increased. The notch 739 may include a plurality of notches to facilitate the breaking of the vent.

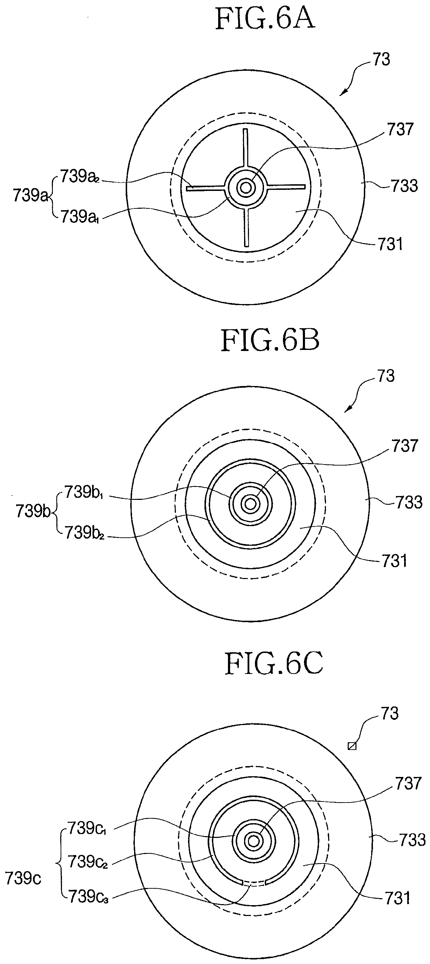

FIGS. 6A to 6C are top plan views of vents having various notches formed therein. As shown in FIG. 6A, a notch 739a may include a circular first notch part 739a1 that is formed around the protrusion 737, and second notch parts 739a2 that extend radially from the first notch part 739a1, toward the connecting part.

As shown in FIG. 6B, a notch 739b may include a circular third notch part 739b1 that is formed around the protrusion 737, and a circular fourth notch part 739b2 that is formed between the third notch part 739b1 and the connecting part 735.

As shown in FIG. 6C, a notch 739c may include a circular fifth notch part 739c1 that is formed around the protrusion 737, and a semi-circular sixth notch part 739c2 that is formed between the fifth notch part 739c1 and the connecting part 735. The sixth notch part 739c2 includes a disconnected part 739c3 that is not notched. When the notch 739 is formed too thick or thin, the vent 73 can malfunction. The notch 739 may have a V or U-shaped cross-section, and may be formed by press-fitting or cutting a part of the body 731. Consequently, the vent 73 can operate at a low, uniform breaking pressure. Thus, the stability of the secondary battery 1 can be improved.

Although a few exemplary embodiments of the present invention have been shown and described, it would be appreciated by those skilled in the art that changes may be made in these exemplary embodiments, without departing from the scope of the invention as defined in the claims.

## Claims

1. A cap assembly (70) comprising:
a conductive vent (73) including:
a body (731) having a protrusion (737) and a notch (739) disposed outside of the protrusion (737) wherein the protrusion (737) is disposed in the centre of the body (731),
a flange (733) disposed outside of the body (731), and
a connecting part (735) connecting the body (731) and the flange (733); and
a cap-up (71) electrically connected to the conductive vent (73), wherein the connecting part (735) has a thickness that is less than the thickness of the body (731) and less than the thickness of the flange (733);
wherein the connecting part (735) extends from the outer edge of the body (731), toward the centre of the body (731); and the flange (733) extends from the connecting part (735), away from the body (731);
wherein the connecting part (735) comprises: a first connecting part (735a) that is connected to the body (731); a second connecting part (735b) that is connected to the flange (733); and a bent part (735c) connecting the first connecting part (735a) and the second connecting part (735b), such that the first connecting part (735a), the bent part (735c) and the second connecting part (735b) form a Z shape;
wherein the bent part (735c) comprises: a first bent part (735c1) connected to the first connecting part (735a) and being bent toward the body (731); a second bent part (735c2) connected to the second connecting part (735b) and being bent away from the body (731); and a third connecting part (735c3) connecting the first bent part (735c1) and the second bent part (735c2)
wherein the thickness of the third connecting part (735c3) is from 53% to 80% of thicknesses of the body (731) and the flange (733).

2. The cap assembly of claim 1, wherein:
the first bent part (735c1) is formed in a sector shape that is bound by first and second radii, and a first arc extending between the first and second radii;
the first and second radii meet at a first vertex (A) disposed at a meeting point between a first end of an inner surface of the first connecting part (735a) and a first end of an inner surface of the third connecting part (735c3);
the second bent part (735c2) is formed in a sector shape that is bound by third and fourth radii, and a second arc extending between the third and fourth radii; and
the third and fourth radii meet at a second vertex (A') disposed at a meeting point between a first end of an outer surface of the second connecting part (735b) and a second end of an outer surface of the third connecting part (735c3).

3. The cap assembly of claim 2, wherein:
the third radius divides the second bent part (735c2) from the third connecting part (735c3); and
the first connecting part (735a) and the first bent part (735c1) are disposed inside of the first end (C) of the outer surface of the third connecting part (735c3) and an interface between the flange (733) and the second connecting part (735b), with respect to a direction along which the third radius extends.

4. The cap assembly of any one of claims 1 to 3, wherein the thickness of the first bent part (735c1) is from 73% to less than 100% of the thicknesses of the body (731) and the flange (733).

5. The cap assembly of any one of claims 1 to 4, wherein the thickness of the first connecting part (735a) is from 53% to less than 100% of the thicknesses of the body (731) and the flange (733).

6. The cap assembly of any one of claims 1 to 5, wherein the first connecting part (735a) has a trapezoid-shaped or rectangular-shaped cross-section.

7. The cap assembly of any one of the preceding claims, wherein the notch (739) comprises:
a circular first notch part (739a1) disposed around the protrusion (737); and
a second notch part (739a2) that extends radially from the first notch part (739a1), toward the connecting part (735).

8. The cap assembly of any one of the preceding claims, wherein the notch (739) comprises:
a circular third notch part (739b1) disposed around the protrusion (737); and
a circular fourth notch part (739b2) disposed between the third notch part (739b1) and the connecting part (735).

9. The cap assembly of any one of the preceding claims, wherein the notch (739) comprises:
a circular fifth notch part (739c1) disposed around the protrusion (739); and
a semi-circular sixth notch part (739c2) disposed between the fifth notch part (739c1) and the connecting part (735).

10. A secondary battery, comprising:
an electrode assembly (10);
a can (20) housing the electrode assembly (10); and
a cap assembly (70) according to any one of the preceding claims sealing an opening of the can (20).

## Patentansprüche

1. Kappenanordnung (70), umfassend:
eine leitfähige Entlüftungsöffnung (73), aufweisend:
einen Körper (731) mit einem Vorsprung (737) und einer Kerbe (739), die außerhalb des Vorsprungs (737) angeordnet ist, wobei der Vorsprung (737) in der Mitte des Körpers (731) angeordnet ist,
einen Flansch (733), der außerhalb des Körpers (731) angeordnet ist, und
einen Verbindungsteil (735), der den Körper (731) und den Flansch (733) verbindet; und
ein Deckeloberteil (71), das mit der leitfähigen Entlüftungsöffnung (73) elektrisch verbunden ist,
wobei der Verbindungsteil (735) eine Dicke aufweist, die geringer als die Dicke des Körpers (731) und geringer als die Dicke des Flansches (733) ist;
wobei sich der Verbindungsteil (735) vom Außenrand des Körpers (731) ausgehend in Richtung der Mitte des Körpers (731) erstreckt; und sich der Flansch (733) von dem Verbindungsteil (735) ausgehend von dem Körper (731) weg erstreckt;
wobei der Verbindungsteil (735) Folgendes umfasst: einen ersten Verbindungsteil (735a), der mit dem Körper (731) verbunden ist; einen zweiten Verbindungsteil (735b), der mit dem Flansch (733) verbunden ist; und einen gebogenen Teil (735c), der den ersten Verbindungsteil (735a) und den zweiten Verbindungsteil (735b) derart verbindet, dass der erste Verbindungsteil (735a), der gebogene Teil (735c) und der zweite Verbindungsteil (735b) eine Z-Form bilden;
wobei der gebogene Teil (735c) Folgendes umfasst: einen ersten gebogenen Teil (735c1), der mit dem ersten Verbindungsteil (735a) verbunden ist und in Richtung des Körpers (731) gebogen ist; einen zweiten gebogenen Teil (735c2), der mit dem zweiten Verbindungsteil (735b) verbunden ist und von dem Körper (731) weg gebogen ist; und einen dritten Verbindungsteil (735c3), der den ersten gebogenen Teil (735c1) und den zweiten gebogenen Teil (735c2) verbindet,
wobei die Dicke des dritten Verbindungsteils (735c3) von 53 % bis 80 % der Dicken des Körpers (731) und des Flansches (733) beträgt.

2. Kappenanordnung nach Anspruch 1, wobei:
der erste gebogene Teil (735c1) in einer Kreisausschnittform ausgebildet ist, die von einem ersten und einem zweiten Radius und einem ersten Bogen, der sich zwischen dem ersten und dem zweiten Radius erstreckt, begrenzt wird;
der erste und der zweite Radius an einer ersten Spitze (A) aufeinandertreffen, die an einem Punkt des Zusammentreffens zwischen einem ersten Ende einer Innenfläche des ersten Verbindungsteils (735a) und einem ersten Ende einer Innenfläche des dritten Verbindungsteils (735c3) angeordnet ist;
der zweite gebogene Teil (735c2) in einer Kreisausschnittform ausgebildet ist, die von einem dritten und einem vierten Radius und einem zweiten Bogen, der sich zwischen dem dritten und dem vierten Radius erstreckt, begrenzt wird; und
der dritte und der vierte Radius an einer zweiten Spitze (A') aufeinandertreffen, die an einem Punkt des Zusammentreffens zwischen einem ersten Ende einer Außenfläche des zweiten Verbindungsteils (735b) und einem zweiten Ende einer Außenfläche des dritten Verbindungsteils (735c3) angeordnet ist.

3. Kappenanordnung nach Anspruch 2, wobei:
der dritte Radius den zweiten gebogenen Teil (735c2) von dem dritten Verbindungsteil (735c3) trennt; und
der erste Verbindungsteil (735a) und der erste gebogene Teil (735c1) bezogen auf eine Richtung, entlang der sich der dritte Radius erstreckt, im Inneren des ersten Endes (C) der Außenfläche des dritten Verbindungsteils (735c3) und einer Grenzfläche zwischen dem Flansch (733) und dem zweiten Verbindungsteil (735b) angeordnet ist.

4. Kappenanordnung nach einem der Ansprüche 1 bis 3, wobei die Dicke des ersten gebogenen Teils (735c1) von 73 % bis unter 100 % der Dicken des Körpers (731) und des Flansches (733) beträgt.

5. Kappenanordnung nach einem der Ansprüche 1 bis 4, wobei die Dicke des ersten Verbindungsteils (735a) von 53 % bis unter 100 % der Dicken des Körpers (731) und des Flansches (733) beträgt.

6. Kappenanordnung nach einem der Ansprüche 1 bis 5, wobei der erste Verbindungsteil (735a) einen trapezförmigen oder rechteckigen Querschnitt aufweist.

7. Kappenanordnung nach einem der vorangehenden Ansprüche, wobei die Kerbe (739) Folgendes umfasst:
einen kreisförmigen ersten Kerbenteil (739a1), der um den Vorsprung (737) herum angeordnet ist; und
einen zweiten Kerbenteil (739a2), der sich von dem ersten Kerbenteil (739a1) ausgehend radial in Richtung des Verbindungsteils (735) erstreckt.

8. Kappenanordnung nach einem der vorangehenden Ansprüche, wobei die Kerbe (739) Folgendes umfasst:
einen kreisförmigen dritten Kerbenteil (739b1), der um den Vorsprung (737) herum angeordnet ist; und
einen kreisförmigen vierten Kerbenteil (739b2), der zwischen dem dritten Kerbenteil (739b1) und dem Verbindungsteil (735) angeordnet ist.

9. Kappenanordnung nach einem der vorangehenden Ansprüche, wobei die Kerbe (739) Folgendes umfasst:
einen kreisförmigen fünften Kerbenteil (739c1), der um den Vorsprung (739) herum angeordnet ist; und
einen halbkreisförmigen sechsten Kerbenteil (739c2), der zwischen dem fünften Kerbenteil (739c1) und dem Verbindungsteil (735) angeordnet ist.

10. Sekundärbatterie, umfassend:
eine Elektrodenanordnung (10);
ein Gehäuse (20), in dem die Elektrodenanordnung (10) untergebracht ist; und
eine Kappenanordnung (70) nach einem der vorangehenden Ansprüche, die eine Öffnung des Gehäuses (20) verschließt.

## Revendications

1. Ensemble formant couvercle (70) comprenant :
un évent conducteur (73) comprenant :
un corps (731) ayant une saillie (737) et une encoche (739) disposée à l'extérieur de la saillie (737), la saillie (737) étant disposée dans le centre du corps (731),
une bride (733) disposée à l'extérieur du corps (731), et
une partie de raccordement (735) raccordant le corps (731) et la bride (733) ; et
un capuchon supérieur (71) raccordé électriquement à l'évent conducteur (73), la partie de raccordement (735) ayant une épaisseur qui est inférieure à l'épaisseur du corps (731) et inférieure à l'épaisseur de la bride (733) ;
dans lequel la partie de raccordement (735) s'étend à partir du bord externe du corps (731), vers le centre du corps (731) ; et la bride (733) s'étend à partir de la partie de raccordement (735), à l'opposé du corps (731) ;
dans lequel la partie de raccordement (735) comprend :
une première partie de raccordement (735a) qui est raccordée au corps (731) ; une deuxième partie de raccordement (735b) qui est raccordée à la bride (733) ; et
une partie pliée (735c) raccordant la première partie de raccordement (735a) et la deuxième partie de raccordement (735b), de sorte que la première partie de raccordement (735a), la partie pliée (735c) et la deuxième partie de raccordement (735b) forment une forme de Z ;
dans lequel la partie pliée (735c) comprend : une première partie pliée (735c1) raccordée à la première partie de raccordement (735a) et étant pliée vers le corps (731) ; une seconde partie pliée (735c2) raccordée à la deuxième partie de raccordement (735b) et étant pliée à l'opposé du corps (731) ; et une troisième partie de raccordement (735c3) raccordant la première partie pliée (735c1) et la seconde partie pliée (735c2),
dans lequel l'épaisseur de la troisième partie de raccordement (735c3) représente de 53 % à 80 % des épaisseurs du corps (731) et de la bride (733).

2. Ensemble formant couvercle selon la revendication 1, dans lequel :
la première partie pliée (735c1) est formée selon une forme de secteur qui est reliée par des premier et deuxième rayons, et un premier arc s'étendant entre les premier et deuxième rayons ;
les premier et second rayons se rencontrent au niveau d'un premier sommet (A) disposé à un point de rencontre entre une première extrémité d'une surface interne de la première partie de raccordement (735a) et une première extrémité d'une surface interne de la troisième partie de raccordement (735c3) ;
la seconde partie pliée (735c2) est formée selon une forme de secteur qui est reliée par des troisième et quatrième rayons, et un second arc s'étendant entre les troisième et quatrième rayons ; et
les troisième et quatrième rayons se rencontrent au niveau d'un second sommet (A') disposé à un point de rencontre entre une première extrémité d'une surface externe de la deuxième partie de raccordement (735b) et une seconde extrémité d'une surface externe de la troisième partie de raccordement (735c3).

3. Ensemble formant couvercle selon la revendication 2, dans lequel :
le troisième rayon sépare la seconde partie pliée (735c2) de la troisième partie de raccordement (735c3) ; et
la première partie de raccordement (735a) et la première partie pliée (735c1) sont disposées à l'intérieur de la première extrémité (C) de la surface externe de la troisième partie de raccordement (735c3) et une interface entre la bride (733) et la deuxième partie de raccordement (735b) par rapport à une direction le long de laquelle le troisième rayon s'étend.

4. Ensemble formant couvercle selon l'une quelconque des revendications 1 à 3, dans lequel l'épaisseur de la première partie pliée (735c1) représente de 73 % à moins de 100 % des épaisseurs du corps (731) et de la bride (733).

5. Ensemble formant couvercle selon l'une quelconque des revendications 1 à 4, dans lequel l'épaisseur de la première partie de raccordement (735a) représente de 53 % à moins de 100 % des épaisseurs du corps (731) et de la bride (733) .

6. Ensemble formant couvercle selon l'une quelconque des revendications 1 à 5, dans lequel la première partie de raccordement (735a) a une section transversale de forme trapézoïdale ou de forme rectangulaire.

7. Ensemble formant couvercle selon l'une quelconque des revendications précédentes, dans lequel l'encoche (739) comprend :
une première partie d'encoche circulaire (739a1) disposée autour de la saillie (737) ; et
une deuxième partie d'encoche (739a2) qui s'étend radialement à partir de la première partie d'encoche (739a1) vers la partie de raccordement (735).

8. Ensemble formant couvercle selon l'une quelconque des revendications précédentes, dans lequel l'encoche (739) comprend :
une troisième partie d'encoche circulaire (739b1) disposée autour de la saillie (737) ; et
une quatrième partie d'encoche circulaire (739b2) disposée entre la troisième partie d'encoche (739b1) et la partie de raccordement (735).

9. Ensemble formant couvercle selon l'une quelconque des revendications précédentes, dans lequel l'encoche (739) comprend :
une cinquième partie d'encoche circulaire (739c1) disposée autour de la saillie (739) ; et
une sixième partie d'encoche semi-circulaire (739c2) disposée entre la cinquième partie d'encoche (739c1) et la partie de raccordement (735).

10. Batterie secondaire comprenant :
un ensemble d'électrodes (10) ;
un bac (20) logeant l'ensemble d'électrodes (10) ; et
un ensemble formant couvercle (70) selon l'une quelconque des revendications précédentes, fermant hermétiquement une ouverture du bac (20).
